# EUROPÄISCHE PATENTSCHRIFT

(11) **EP 2 318 978 B1**
(45) Veröffentlichungstag und Bekanntmachung des Hinweises auf die Patenterteilung: **21.08.2013**
(21) Anmeldenummer: 09778046.4
(22) Anmeldetag: 21.08.2009
(51) Int. Cl.: G06K 7/00, G06K 17/00, B09B 3/00, B02C 25/00

(54) **RÜCKNEHMEN UND ZERSTÖREN VON DATENTRÄGERN**
UNDOING AND DESTROYING DATA CARRIERS
RÉCUPÉRATION ET DESTRUCTION DE SUPPORTS DE DONNÉES

(30) Priorität: 22.08.2008 DE 102008039402
(43) Veröffentlichungstag der Anmeldung: 11.05.2011
(73) Patentinhaber: Giesecke & Devrient GmbH, 81677 München (DE)
(72) Erfinder: DÖLLINGER, Martin, 81371 München (DE); GROSSER, Caroline, 85646 Anzing (DE)
(86) Internationale Anmeldenummer: PCT/EP2009/006097
(87) Internationale Veröffentlichungsnummer: WO 2010/020430

(56) Entgegenhaltungen:
- EP-A2- 0 784 284
- US-A1- 2006 180 686
- US-A1- 2007 075 168
- US-A1- 2008 065 263

## Beschreibung

Die vorliegende Erfindung betrifft eine Vorrichtung, ein System und ein Verfahren zum Zerstören von gebrauchten, kartenförmigen Datenträgern, wie zum Beispiel Chipkarten, Magnetstreifenkarten und dergleichen.

Personalisierte kartenförmige Datenträger, wie beispielsweise Krankenkassenkarten, Bankkarten, SIM-Karten oder Schüler- und Studentenkarten, befinden sich im großen Umfang im Besitz von Privatpersonen. Diese Datenträger weisen in den meisten Fällen eine begrenzte Gültigkeit und Laufzeit auf. Die Verwender der Datenträger werden von den herausgebenden Unternehmen zum Beispiel beim Zusenden eines neuen Datenträgers darum gebeten, den abgelaufenen und damit ungültigen Datenträger zurückzusenden oder zu zerstören, beispielsweise mit einer Schere zu zerschneiden.

Allerdings besteht für die meisten Verwender von solchen Datenträgern keine Motivation, diesen zurückzusenden, oder sie zerstören den Datenträger nicht fachgerecht. Das Zurücksenden des gebrauchten Datenträgers stellt einen Aufwand für den Benutzer dar und wird deshalb meist nicht vorgenommen oder einfach vergessen. Ein Nachhaken seitens der herausgebenden Unternehmen findet in den meisten Fällen nicht statt, da dies das Ansehen bei den eigenen Kunden schädigen könnte.

Verwender, die sich entscheiden, den gebrauchten Datenträger selbst zu zerstören, kennen oft den technischen Aufbau beispielsweise einer Chipkarte nicht und zerschneiden nicht den Chip, der die sensiblen Daten enthält, sondern einfach die Chipkarte in der Mitte. Auch werden ein eventuell vorhandener Magnetstreifen oder in den Datenträger eingeprägte oder auf den Datenträger aufgedruckte Daten, wie beispielsweise der Name oder die Kartennummer, oft nicht ausreichend zerstört und unleserlich gemacht.

Für den Fall, dass ein Verwender seinen gebrauchten Datenträger zurücksendet, existieren bereits Vorrichtungen, die industriell größere Mengen von Datenträgern zuverlässig zerstören können. Diese verfügen über eine Eingabeeinrichtung zum Eingeben der Datenträger, eine Zerstörungseinrichtung zum Zerstören der Datenträger und zumindest einen Behälter, in den die zerstörten Datenträger nach der Zerstörung, unter Umständen nach Materialien getrennt, gelangen. Vorrichtungen zum Zerstören von Chipkarten werden beispielsweise in DE 9415544 U1 und DE 29615032 U1 beschrieben. Für Datenträger von Privatpersonen kommen solche Vorrichtungen jedoch bislang kaum zum Einsatz.

US 2007/0075168 A1, das den Oberbegriff der Ansprüche 1 und 6 formt, offenbart ein computerimplementiertes Verfahren, eine Vorrichtung und einen Programmcode zum Schreddern von Objekten. Die Vorrichtung hat mehrere Komponenten, einschließlich einen Behälter, der Objekte aufnimmt. Eine Schreddereinheit ist mit dem Behälter verbunden, wobei die Schreddereinheit wahlweise die im Behälter sich befindlichen Objekte zerstört. Ein Objektdetektor detektiert das Vorhandensein eines Objektes in dem Behälter. Ein Objektidentifizierer identifiziert Objekte, die sich im Behälter befinden. Die Vorrichtung hat auch einen Speicher und eine Verbindung. Die Verbindung stellt eine Kommunikationsverbindung mit einem Datenverarbeitungssystem her. Ein Controller in der Vorrichtung speichert Identifikationen von Objekten, die von dem Objektidentifizierer identifiziert wurden, in dem Speicher ab und sendet ein Signal an die Schreddereinheit um das Schreddern der Objekte zu steuern.

US 2006/0180686 A1 offenbart ein für jede Benutzung zu bezahlendes Schreddersystem zur öffentlichen Verwendung um Dokumente und Medien, die private oder persönliche Information enthalten zu zerstören. Das System enthält einen Schredder, eine Zuführeinrichtung um Material aufzunehmen und einen Ausgang um das Material zu einem Eingang das Schredders zu befördern und einen Behälter unterhalb einem Ausgang des Schredders um geschreddertes Material aufzunehmen. Eine Öffnung stellt eine Sichtverbindung zum Inneren des Behälters her, um es dem Benutzer zu ermöglichen, persönlich die Zerstörung zu beobachten. Das System enthält ferner einen Zahlungsempfangsmechanismus, wie z.B. eine Tastatur, einen Kartenleser eine Aufnahme für eine Rechnung oder eine Münze. Ein Controller validiert und/oder authentifiziert eine Bezahlung im Empfangsmechanismus und bestimmt eine Schredderzeitperiode. Der Controller betreibt den Schredder für die Zeit des Schredderns, wie bei einer Reaktion auf einen Startbefehl von dem Benutzer über einen Startknopf. Eine Anzeige wird dekrementiert um dem Benutzer die verbleibende Schredderzeit anzuzeigen.

Da die Daten von nicht zuverlässig zerstörten Datenträgern in falsche Hände geraten und für kriminelle Vorhaben ausgenutzt werden könnten, haben die herausgebenden Unternehmen ein großes Interesse daran, dass abgelaufene und ungültige Datenträger aus dem Verkehr gezogen und zerstört werden.

Die Aufgabe der vorliegenden Erfindung besteht daher darin, das Zerstören von gebrauchten, kartenförmigen Datenträgern, wie zum Beispiel Chipkarten, Magnetstreifenkarten und dergleichen für das herausgebende Unternehmen sicher und dokumentiert zu gestalten und unmittelbar anschließend an die Zerstörung durch neue Datenträger zu ersetzen.

Die Aufgabe wird durch eine Vorrichtung, ein System und ein Verfahren gemäß den unabhängigen Ansprüchen 1, 3 und 6 gelöst. Vorteilhafte Ausgestaltungen und Weiterbildungen sind in davon abhängigen Ansprüchen angegeben.

Erfindungsgemäß erfolgt die zuverlässige Zerstörung der gebrauchten, kartenförmigen Datenträger durch eine Vorrichtung, in die ein Verwender des Datenträgers den Datenträger selbst eingibt. Der mindestens eine Behälter, in den zumindest ein Teil des zerstörten Datenträgers nach der Zerstörung gelangt, ist für den Verwender unzugänglich. Dadurch ist die Zerstörung besonders zuverlässig, da die Reste des Datenträgers nicht in die Hände des Verwenders oder Dritter gelangen können und somit vor einem eventuellen Missbrauch bewahrt werden.

Eine erfindungsgemäße Vorrichtung ist bevorzugt für Privatpersonen zugänglich und bedienbar und befindet sich zum Beispiel in einem Vorraum einer Bank, in dem auch andere Automaten, wie Geldautomaten stehen können. Die Vorrichtung kann auch vollständig in einen Geldautomaten integriert sein, wodurch die Bedienung vereinfacht wird. Durch das bekannte Umfeld eines Geldautomaten sinkt auch die Hemmschwelle der Verwender, die Vorrichtung zum Rücknehmen und Zerstören von gebrauchten Datenträgern zu verwenden.

Um personalisierte Leistungen abhängig von dem eingegebenen Datenträger anbieten zu können, ist in einer vorteilhaften Ausgestaltung der Erfindung eine Ausleseeinrichtung vorgesehen, die die auf dem Datenträger gespeicherten Daten vor dem Zerstören des Datenträgers ausliest. Aufdrucke auf dem Datenträger können dabei optisch zum Beispiel mittels einer Kamera erfasst werden. Weiter können zum Auslesen ein Magnetstreifenleser und/ oder ein Chipkartenleser vorhanden sein. Die Ausleseinheit kann auch ein Gerät zur Echtheitsprüfung des eingegebenen Datenträgers umfassen. Abhängig von den zu zerstörenden Datenträgern und dem Unternehmen, das die Vorrichtung betreibt, können vielfältige Lese- und Prüfeinheiten vorgesehen sein.

Über eine Benutzerschnittstelle, die vorteilhaft ein berührungsempfindlicher Bildschirm, ein so genannter Touch-Screen, ist, kann der Verwender des Datenträgers nach dem Eingeben des Datenträgers beispielsweise über eine Menüführung die aus dem Datenträger ausgelesenen Daten einsehen und weitere Schritte vor dem Zerstören des Datenträgers kontrollieren und/ oder bestätigen. Hierdurch kann dem Verwender angezeigt werden, welche Daten vernichtet werden und welche Aktionen vor oder nach der Zerstörung des Datenträgers durchgeführt werden können. Dies bietet dem Verwender eine Transparenz des Vorgangs und trägt dazu bei, die erfindungsgemäße Vorrichtung zum Zerstören seines Datenträgers zu benutzen. Alternativ zum berührungsempfindlichen Bildschirm ist auch eine Spracheingabe oder jede andere geeignete Eingabemöglichkeit verwendbar.

Die von dem zu zerstörenden Datenträger erfassten Daten können vorteilhaft auch dazu benutzt werden, einen neuen Datenträger für den Verwender zu erzeugen und vorzugsweise sofort auszugeben ("Instant Issuance"). Beispielsweise kann dem Verwender mitgeteilt werden, dass sein Datenträger zu einem bestimmten Zeitpunkt ungültig werden wird und er die Möglichkeit hat, unter Verwendung der Vorrichtung nicht nur seinen bisherigen Datenträger zu zerstören, sondern unmittelbar einen neuen Datenträger zu erhalten, auf den dann etwaige individuelle Daten und Informationen gleich überspielt werden. Darüber hinaus kann der Verwender über die Benutzerschnittstelle das Äußere der Karte selbst bestimmen, wodurch der Verwender zusätzlich motiviert wird, den alten Datenträger in der Vorrichtung zerder zusätzlich motiviert wird, den alten Datenträger in der Vorrichtung zerstören zu lassen. Kennzeichnend für die Erfindung ist, dass eine für das "Instant Issuance" eingerichtete Vorrichtung umfasst dementsprechend ein Magazin für Datenträgerrohlinge zur Erstellung der neu auszugebenden Datenträger sowie weitere Einrichtungen zur Gestaltung des Kartenrohlings, wie beispielsweise eine Schreibeinrichtung zum Beschreiben eines Chips und/ oder Magnetstreifens und/ oder andersartigen maschinenlesbaren Datenspeicher, Druckeinrichtungen im weitesten Sinne zum drucktechnischen Gestalten des äußeren Erscheinungsbilds des auszugebenden Datenträgers sowie zum Aufbringen der personenbezogenen und anderer individueller und allgemeiner Daten auf den auszugebenden Datenträger. Derartige Einrichtungen sind nicht auf die klassischen Druckverfahren beschränkt, sondern umfassen auch Laserbeschriftungseinrichtungen, Hoch- und Tiefprägeeinrichtungen, Lackiereinrichtungen und dergleichen mehr.

Um die Motivation zur Zerstörung des Datenträgers unter Verwendung der Vorrichtung zu erhöhen, kann vorteilhaft eine Ausgabe vorhanden sein, die zum Ausgeben einer Gegenleistung als Resultat auf die Eingabe und die Zerstörung des Datenträgers dient. Die Gegenleistung können Sachwerte, wie Gegenstände zum Sammeln, oder auch beispielsweise Gutscheine sein. Hierfür ist vorteilhaft ein Drucker vorgesehen, der solche Gutscheine, aber auch beispielsweise Belege oder auf dem Datenträger gespeicherte Daten ausdrucken kann. Der Ausdruck kann dann über die Ausgabe ausgegeben werden. Gegenleistungen können neben Sachgegenständen auch beispielsweise das Abspielen eines Musikstücks oder virtuelle Gegenwerte, wie zum Beispiel Musikstücke oder Spielesoftware zum Übertragen auf ein mobiles Endgerät des Verwenders, sein tenträgers beobachten kann. Dies stellt einen weiteren Anreiz zur Benutzung der Vorrichtung dar, da die sichtbare Zerstörung für den Verwender interessant und faszinierend sein kann. Weiter gibt die Sichtkontrolle dem Verwender die Sicherheit, dass der Datenträger wirklich zerstört wird und nicht einfach nur verschwindet, ohne dass der Verwender genau weiß, was mit dem Datenträger passiert.

Da einige Daten auf dem Datenträger auch nach der Zerstörung des Datenträgers benötigt werden können, wie beispielsweise ein auf einer SIM-Karte gespeichertes Telefonbuch, kann die Vorrichtung vorteilhaft eine Drahtlosschnittstelle umfassen, die diese Daten kontaktlos im Nahbereich auf ein mobiles Endgerät oder einen weiteren Datenträger des Verwenders übertragt. Hierfür kann beispielsweise die Near Field Communication- (NFC) oder Bluetooth- Technologie verwendet werden.

Die Vorrichtung kann Teil eines Systems zum Zerstören von gebrauchten Datenträgern sein, das weiter einen externen Rechner umfasst, wobei die Vorrichtung und der externe Rechner über ein Netzwerk in Verbindung stehen und kommunizieren. Das Netzwerk kann hierbei eine Drahtlosschnittstelle umfassen oder auch kabelgebunden sein. Der externe Rechner, der an einem zu der Vorrichtung entfernten Ort steht, kann beispielsweise ein Rechner des herausgebenden Unternehmens sein. Auf diese Weise kann das Unternehmen über die Zerstörung des Datenträgers informiert werden und es können des Weiteren aus dem Datenträger ausgelesene Daten übertragen werden.

Die Erfindung wird im Folgenden beispielhaft anhand der begleitenden Zeichnung beschrieben.

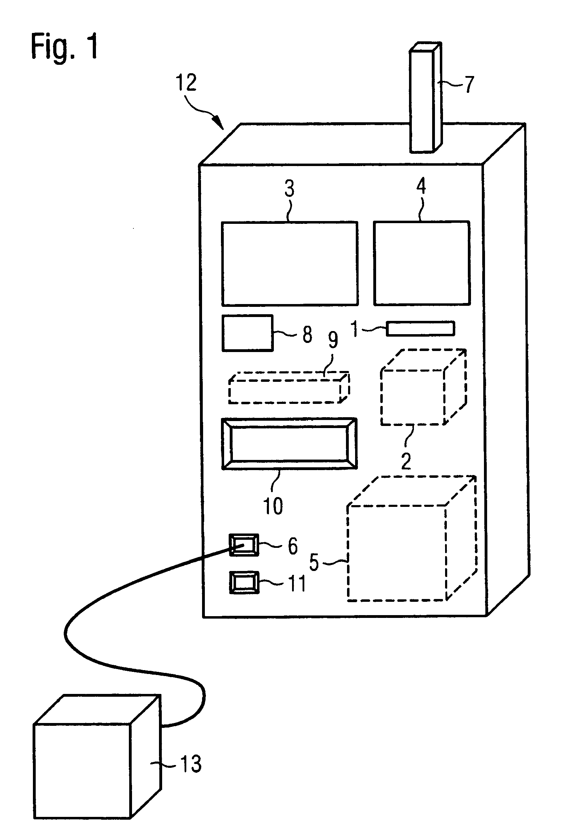

Figur 1 zeigt schematisch den Aufbau eines Systems, das eine Vorrichtung und einen externen Rechner, die über ein Netzwerk verbunden sind, umfasst.

Der Verwender des Datenträgers, nachfolgend beispielhaft eine Chipkarte, führt die Chipkarte in einen Karteneingabeschlitz 1 ein. Falls die Vorrichtung 12 zum Zerstören der Chipkarte in einen Geldautomaten integriert ist, kann der Schlitz 1 mit dem Karteneingabeschlitz des Geldautomaten identisch sein. Die Vorrichtung 12 kann aber auch als separater Automat aufgestellt werden und verfügt hierzu über eine eigene Stromversorgung 11. Nachdem der Verwender die Chipkarte in den Schlitz 1 eingeführt hat, werden zunächst in der Ausleseeinrichtung 2 die auf der Chipkarte gespeicherten Daten ausgelesen und gegebenenfalls eine Echtheitsprüfung der Chipkarte durchgeführt. Darüber hinaus wird auch der Herausgeber der Chipkarte mittels der Ausleseeinrichtung 2 erkannt, so dass auch Chipkarten von Unternehmen akzeptiert werden können, die nicht von dem Unternehmen stammen, das die Vorrichtung bereitstellt.

Auf dem Bildschirm 3 werden die erfassten Daten, wie zum Beispiel Kartentyp, Gültigkeitsdauer, ein aufgeladener Geldbetrag oder sonstige auf der Chipkarte gespeicherte Daten angezeigt. Der Bildschirm 3 ist als berührungsempfindliches LC-Display ausgebildet, so dass der Verwender der Chipkarte die Vorrichtung einfach über die angezeigte Menüführung bedienen kann.

Auf Basis der aus der Chipkarte ausgelesenen Daten werden dem Verwender kartenspezifische Aktionen angeboten. Zum Beispiel wird bei einer eingegebenen Geldkarte oder Prepaid-SIM-Karte der Restbetrag angezeigt und kann über die Menüauswahl auf das Konto des Verwenders überwiesen, in bar ausgezahlt oder auf einen anderen Datenträger, zum Beispiel über NFC oder Bluetooth, übertragen werden. Es kann auch die Möglichkeit zum Spenden für einen wohltätigen Zweck angeboten werden. Bei Bonuskarten können die gespeicherten Werteinheiten angezeigt und ebenfalls überwiesen, übertragen oder ausgezahlt werden.

Bei einer eingegebenen SIM-Karte eines Mobiltelefons kann der Verwender entscheiden, ob ein auf der SIM-Karte gespeichertes Telefonbuch, gespeicherte Kurznachrichten (SMS), Massenspeicherinhalte (MegaSIM) oder auf der SIM-Karte gespeicherte Lizenzen entweder ausgedruckt oder versendet werden sollen. Das Versenden kann an einen Server, einen Dienstleister, gegebenenfalls verschlüsselt an eine E-Mail-Adresse oder auf eine andere Chipkarte oder auf eine von der Vorrichtung neu auszugebende Chipkarte ("instant issuance") erfolgen. Die Sicherung solcher Daten kann von dem Verwender auch unabhängig von einer Zerstörung der SIM-Karte als Dienstleistung in Anspruch genommen werden.

Dem Verwender kann vor der Zerstörung der Karte über eine Menüführung auf dem Bildschirm 3 auch die Möglichkeit gegeben werden, einen mit der Karte verbunden Vertrag oder ein Konto zu kündigen. Da somit eine Kündigung und Zerstörung der Karte auf einmal erledigt werden können, stellt dies einen erhöhten Komfort für den Verwender dar.

Die Übertragung der aus der zu zerstörenden Chipkarte ausgelesenen Daten erfolgt dabei über ein Netzwerk an einen externen Rechner 13. Die Vorrichtung 12 umfasst hierzu eine Netzwerkschnittstelle 6 und eine Drahtlosschnittstelle 7 zum drahtlosen Versenden der Daten, beispielsweise über Mobilfunk. Der externe Rechner 13 kann über das Internet mit der Vorrichtung 12 verbunden sein und die Daten in einer speziell generierten E-Mail erhalten.

Im nächsten Schritt erfolgt die Zerstörung der Chipkarte, der eine Sicherheitsabfrage und Bestätigung durch den Verwender vorausgehen kann. Die Zerstörung der Chipkarte erfolgt für den Verwender sichtbar durch ein Sichtfenster 4, wodurch wie bereits erwähnt Vertrauen gegenüber dem Verwender geschaffen und eventuell eine gewisse Faszination hervorgerufen wird. Diese Sichtbarkeit des Zerstörungsvorgangs kann zur Motivation des Verwenders beitragen, die Vorrichtung 12 überhaupt zu benutzen.

Die Teile der zerstörten Chipkarte gelangen anschließend in den Behälter 5, der für den Verwender nicht zugänglich ist. Um dem wachsenden Umweltbewusstsein Rechnung zu tragen, kann die Vorrichtung 12 mit mehreren Behältern ausgestattet sein, in die die verschiedenen recyclebaren Materialien der zerstörten Chipkarte, wie die metallischen Bestandteile des Chips und die Kunststoffe des Kartenkörpers, getrennt voneinander gelangen und somit einfacher der Wiederverwertung zugeführt werden können. Dem Verwender können auf dem Bildschirm 3 Informationen über das Recycling der Chipkarte angezeigt werden, wie eingespartes Kohlenstoffdioxid oder die zurückgewonnenen Rohstoffe, bezogen auf die eine zerstörte Karte oder auch bezogen auf alle zerstörten Karten in der Vorrichtung oder auch bundes- oder weltweit.

Nach der Zerstörung der Chipkarte erfolgt über die Schnittstellen 6, 7 eine Benachrichtigung an das herausgebende Unternehmen über die Zerstörung der Chipkarte. Dies können zum Beispiel eine Bank, ein Mobilfunkbetreiber oder eine Krankenkasse sein. Hierbei erfolgt auch eine Übermittlung der zur Identifizierung der zerstörten Karte notwendigen Daten. Der Verwender wird abschließend über den Bildschirm 3 über die erfolgreiche Zerstörung und die Übermittlung der Informationen an das herausgebende Unternehmen informiert.

Zur zusätzlichen Motivation des Verwenders erhält dieser eine Gegenleistung über die Ausgabe 10 oder die NFC-/Bluetooth-Schnittstelle 8. Zum Ausdrucken von Gutscheinen, Belegen oder anderen Daten, wie zum Beispiel den aus der Chipkarte ausgelesenen Daten, ist eine Beschriftungseinrichtung 9, z.B. ein üblicher Drucker, vorgesehen. Die Gegenleistungen können vielfältig sein. Die Ausgabe eines Gutscheins oder Rabattbelegs entweder durch Anzeigen eines Codes auf dem Bildschirm 3 oder durch Ausdruck stellt eine erste einfache Möglichkeit dar, einen Anreiz zur Verwendung der Vorrichtung 12 zu geben.

Eine weitere mögliche Gegenleistung ist die Ausgabe von Gegenständen beispielsweise zum Sammeln. Dies kann auch eine Motivation zur erneuten Nutzung der Vorrichtung 12 zur Zerstörung eines weiteren Datenträgers sein. Mit der Nutzung der Vorrichtung 12 kann auch eine Gewinnchance für den Verwender entstehen, zum Beispiel durch zufällige Auswahl eines Verwenders oder durch Auswahl jeder 100. zurückgegebenen Chipkarte. Denkbar ist auch die Ausgabe virtueller Gegenwerte, wie Klingeltöne für Mobiltelefone, Spielesoftware oder mp3-Musikstücke, die mittels der NFC-/ Bluetooth-Schnittstelle 8 zum Beispiel auf ein Mobiltelefon des Verwenders übertragen werden können. Die Vorrichtung kann auch eine Melodie oder ein Musikstück nach Wahl abspielen, gegebenenfalls abhängig von der Anzahl der von dem Verwender zurückgegebenen und zerstörten Datenträger.

Beim Auslesen der Daten aus einer SIM-Karte mittels der Ausleseeinrichtung 2, kann auch die MAC-Adresse (MAC: Media Access Control) der SIM-Karte ausgelesen werden. Aufgrund der weltweiten Verbreitung von SIM-Karten und der damit verbundenen Knappheit solcher Adressen, ist es sinnvoll, die MAC-Adressen, Telefonnummern und IP Adressen von ungültigen SIM-Karten wiederzuverwenden. Da diese Adressen technisch bedingt nur einmalig auftreten dürfen, können diese Adressen nur wiederverwendet werden, wenn sie eindeutig freigegeben werden. Dies ist nur möglich, falls die Zerstörung der SIM-Karte zuverlässig erfolgt und das herausgebende Unternehmen davon in Kenntnis gesetzt wird. Dies ist mit der Vorrichtung 12 möglich.

Sofern die Vorrichtung eingerichtet ist, dem Verwender im Zusammenhang mit der Eingabe/Zerstörung seines Datenträgers einen neuen Datenträger unmittelbar auszugeben ("Instant Issuance"), kann die Beschriftungseinrichtung 9 mit einem hier nicht explizit dargestellten Magazin für Chipkartenrohlinge in Verbindung stehen und zusätzlich zu dem bereits genannten Drucker weitere Beschriftungseinrichtungen speziell zur Beschriftung der Chipkartenrohlinge umfassen, wie zum Beispiel eine Laserbeschriftungseinrichtung, eine Einrichtung zum Hoch- oder Tiefprägen, eine Einrichtung zum Lackieren der Chipkartenoberfläche, beispielsweise durch Besprühen, und dergleichen mehr. Desweiteren kann die Beschriftungseinrichtung 9 Komponenten zum Beschreiben elektronischer, magnetischer, optischer oder anderer maschinell beschreibbarer Datenspeicher, wie zum Beispiel Chip und/oder Magnetstreifen, umfassen. Auf diese Weise können sowohl das optische Erscheinungsbild der neu auszugebenden Chipkarte gestaltet als auch Daten auf und in den Rohling auf- bzw. eingebracht werden. Das optische Erscheinungsbild der neu auszugebenden Chipkarte kann der Verwender über den berührungsempfindlichen Bildschirm 3 bei entsprechender Menüführung individuell beeinflussen. Die auf und in die neu auszugebende Chipkarte auf- bzw. einzubringenden Daten können von dem Verwender beeinflusst werden, umfassen aber zumindest einen Teil der zuvor aus dem zu zerstörenden Datenträger ausgelesenen Daten.

Das System selbst und insbesondere die Vorrichtung 12 sind eine sichere Umgebung, in der es möglich ist, die Daten von der alten Karte auf die neue Karte sicher zu übertragen, ohne daß auf die Daten von außen zugegriffen werden kann.

## Patentansprüche

1. Vorrichtung (12) zum Zerstören von gebrauchten, kartenförmigen Datenträgern, wie zum Beispiel Chipkarten, Magnetstreifenkarten und dergleichen, umfassend eine Eingabeeinrichtung (1) zum Eingeben eines zu zerstörenden Datenträgers durch einen Verwender des Datenträgers, eine Zerstörungseinrichtung zum Zerstören des eingegebenen Datenträgers und mindestens einen Behälter (5) zum Aufnehmen von zumindest Teilen des zerstörten Datenträgers, wobei der mindestens eine Behälter (5) für den Verwender unzugänglich ist,
eine Ausleseeinrichtung (2) zum Auslesen von auf dem Datenträger gespeicherten Daten,
eine Benutzerschnittstelle (3), über die der Verwender die Vorrichtung (12) bedienen kann,
wobei die Benutzerschnittstelle (3) ein berührungsempfindlicher Bildschirm ist,
eine Ausgabe (10) zum Ausgeben einer Gegenleistung als Reaktion auf die Eingabe und Zerstörung des Datenträgers,
einen Drucker (9) zum Ausdrucken von aus dem Datenträger ausgelesenen Daten und/oder Belegen und/oder Gutscheinen für den Verwender,
ein Sichtfenster (4), durch das der Zerstörungsvorgang für den Verwender sichtbar ist,
eine Drahtlosschnittstelle (8) zum kontaktlosen Übertragen von Daten im Nahbereich (NFC) auf ein mobiles Endgerät oder einen weiteren Datenträger des Verwenders,
**gekennzeichnet durch** ein Magazin für Datenträgerrohlinge zur Ausgabe neuer Datenträger.

2. Vorrichtung nach Anspruch 1, **gekennzeichnet durch** eine Einrichtung zur Bearbeitung, insbesondere Beschriftung, von Datenträgerrohlingen aus dem Magazin.

3. System zum Zerstören von gebrauchten, kartenförmigen Datenträgern, wie zum Beispiel Chipkarten, Magnetstreifenkarten und dergleichen, umfassend eine Vorrichtung (12) nach einem der Ansprüche 1 bis 2 und einen externen Rechner (13) an einem entfernten Ort, die über ein Netzwerk miteinander in Kommunikationsverbindung stehen.

4. System nach Anspruch 3, **dadurch gekennzeichnet, dass** das Netzwerk für die Kommunikation eine Drahtlosschnittstelle (7) umfasst.

5. System nach Anspruch 3 oder 4, **dadurch gekennzeichnet, dass** über das Netzwerk aus dem Datenträger ausgelesene Daten an den externen Rechner (13) übertragen werden können.

6. Verfahren zum Zerstören von gebrauchten, kartenförmigen Datenträgern, wie zum Beispiel Chipkarten, Magnetstreifenkarten und dergleichen, umfassend die Schritte:
- Bereitstellen einer Vorrichtung (12) nach Anspruch 1,
- Zerstören des von einem Verwender in eine Eingabeeinrichtung (1) eingegebenen Datenträgers und
- Ablegen von zumindest Teilen des zerstörten Datenträgers in für den Verwender unzugänglicher Weise,
- Auslesen von Daten des eingegebenen Datenträgers vor dem Schritt des Zerstörens des Datenträgers,
**gekennzeichnet durch** den weiteren Schritt des Ausgebens eines neuen Datenträgers aus dem Magazin der Vorrichtung (12) an den Verwender, wobei zuvor zumindest ein Teil der ausgelesenen Daten auf den neuen Datenträger übertragen werden.

7. Verfahren nach Anspruch 6, **gekennzeichnet durch** den Schritt des Ausgebens einer Gegenleistung an den Verwender.

8. Verfahren nach einem der Ansprüche 6 bis 7, **gekennzeichnet durch** den Schritt des Anzeigens der aus dem Datenträger ausgelesenen Daten und/oder datenträgerspezifischer Aktionen zur Kontrolle und/oder Bestätigung und/oder Kenntnisnahme **durch** den Verwender vor dem Schritt des Zerstörens des Datenträgers.

## Claims

1. An apparatus (12) for destroying used, card-shaped data carriers, such as for example chip cards, magnetic-stripe cards and the like, comprising an input device (1) for inputting a data carrier to be destroyed by a user of the data carrier, a destruction device for destroying the input data carrier and at least one container (5) for accommodating at least parts of the destroyed data carrier, wherein the at least one container (5) is inaccessible for the user,
a readout device (2) for reading out data stored on the data carrier,
a user interface (3), via which the user can operate the apparatus (12),
wherein the user interface (3) is a touch-sensitive screen,
an output (10) for outputting a reciprocation in reaction to the input and destruction of the data carrier,
a printer (9) for printing out data and/or receipts and/or vouchers read out from the data carrier for the user,
a viewing window (4) through which the destruction process is visible for the user,
a wireless interface (8) for contactless transmission of data in the near field (NFC) to a mobile terminal or a further data carrier of the user,
**characterized by** a magazine for blank data-carriers for outputting new data carriers.

2. The apparatus according to claim 1, **characterized by** a device for processing, in particular inscribing, blank data carriers from the magazine.

3. A system for destroying used, card-shaped data carriers, such as for example chip cards, magnetic-stripe cards and the like, comprising an apparatus (12) according to any of the claims 1 to 2 and an external computer (13) in a remote location, which are in communication connection with each other via a network.

4. The system according to claim 3, **characterized in that** the network comprises a wireless interface (7) for communication.

5. The system according to claim 3 or 4, **characterized in that** via the network data read out from the data carrier can be transmitted to the external computer (13).

6. A method for destroying used, card-shaped data carriers, such as for example chip cards, magnetic-stripe cards and the like, comprising the steps of:
- making available an apparatus (12) according to claim 1,
- destroying the data carrier input in an input device (1) by a user and
- depositing at least parts of the destroyed data carrier in a user-inaccessible fashion,
- reading out data of the input data carrier before the step of destroying the data carrier,
**characterized by** the further step of outputting a new data carrier from the magazine of the apparatus (12) to the user, wherein beforehand at least a part of the read-out data are transmitted to the new data carrier.

7. The method according to claim 6, **characterized by** the step of outputting a reciprocation to the user.

8. The method according to any of the claims 6 to 7, **characterized by** the step of displaying the data read out from the data carrier and/or data-carrier specific actions for the user to check and/or confirm and/or acknowledge before the step of destroying the data carrier.

## Revendications

1. Dispositif (12) destiné à la destruction de supports de données usagés en forme de carte, tels que par exemple cartes à puce, cartes à bande magnétique et objets similaires, comprenant un équipement d'introduction (1) pour l'introduction, par un usager du support de données, d'un support de données à détruire, un équipement de destruction pour la destruction du support de données introduit, et au moins un contenant (5) pour la réception d'au moins des parties du support de données détruit, le au moins un contenant (5) étant inaccessible pour l'usager,
un équipement de lecture (2) pour la lecture de données mémorisées sur le support de données,
une interface utilisateur (3) par l'intermédiaire de laquelle l'usager peut manier le dispositif (12),
l'interface utilisateur (3) étant un écran tactile,
un point de délivrance (10) pour la délivrance d'une contre-prestation en réaction à l'introduction et à la destruction du support de données,
une imprimante (9) pour l'impression de données et/ou de justificatifs et/ou de bons lus à partir du support de données et destinés à l'usager,
une fenêtre (4) à travers laquelle le processus de destruction est visible pour l'usager,
une interface sans fil (8) pour le transfert sans fil de données en champ proche (NFC) sur un terminal mobile ou sur un autre support de données de l'usager,
**caractérisé par** un magasin pour supports de données vierges destiné à la délivrance de nouveaux supports de données.

2. Dispositif selon la revendication 1, **caractérisé par** un équipement de traitement, notamment de marquage, de supports de données vierges provenant du magasin.

3. Système de destruction de supports de données usagés en forme de carte, tels que par exemple cartes à puce, cartes à bande magnétique et objets similaires, comprenant un dispositif (12) selon une des revendications de 1 à 2 et un ordinateur externe (13) se trouvant en un lieu éloigné, qui sont en relation de communication l'un avec l'autre par l'intermédiaire d'un réseau.

4. Système selon la revendication 3, **caractérisé en ce que** le réseau comprend pour la communication une interface sans fil (7).

5. Système selon la revendication 3 ou 4, **caractérisé en ce que** des données lues par l'intermédiaire du réseau à partir du support de données peuvent être transférées à l'ordinateur externe (13)

6. Procédé de destruction de supports de données usagés en forme de carte, tels que par exemple cartes à puce, cartes à bande magnétique et objets similaires, comprenant les étapes :
- mise à disposition d'un dispositif (12) selon la revendication 1,
- destruction du support de données introduit par un usager dans un équipement d'introduction (1) et
- stockage, d'une manière inaccessible pour l'usager, d'au moins des parties du support de données détruit,
- lecture, avant l'étape de la destruction du support de données, de données du support de données introduit,
**caractérisé par** l'étape supplémentaire de la délivrance d'un nouveau support de données provenant du magasin du dispositif (12) à l'usager, au moins une partie des données lues étant auparavant transférées sur le nouveau support de données.

7. Procédé selon la revendication 6, **caractérisé par** l'étape de la délivrance d'une contre-prestation à l'usager.

8. Procédé selon une des revendications de 6 à 7, **caractérisé par** l'étape de l'affichage des données lues à partir du support de données et/ou d'actions spécifiques du support de données pour le contrôle et/ou la confirmation et/ou la prise de connaissance par l'usager avant l'étape de la destruction du support de données.
